# EUROPEAN PATENT SPECIFICATION

(11) **EP 4 210 970 B1**
(45) Date of publication and mention of the grant of the patent: **06.08.2025**
(21) Application number: 20786087.5
(22) Date of filing: 10.09.2020
(51) Int. Cl.: B60C 1/00, C08K 3/04, C08K 5/07, C08K 5/09, B60C 9/00, C08K 5/00

(54) **A RUBBER COMPOSITION**
KAUTSCHUKZUSAMMENSETZUNG
COMPOSITION DE GOMME

(43) Date of publication of application: 19.07.2023
(73) Proprietor: COMPAGNIE GENERALE DES ETABLISSEMENTS MICHELIN, 63000 Clermont-Ferrand (FR)
(72) Inventor: SAKAMOTO, Shino, Tokyo 163-1073 (JP); GOUTEYRON, Sylvain, Tokyo 163-1073 (JP)
(74) Representative: M.F.P. Michelin
(86) International application number: PCT/JP2020/034251
(87) International publication number: WO 2022/054190

(56) References cited:
- EP-A1- 1 712 590
- EP-A1- 3 181 624
- EP-B1- 3 181 624
- JP-A- 2020 114 896

## Description

### [Technical Field]

The field of the invention is that of a rubber composition intended in particular for a rubber article, in more particular for a rubber composite or a tire.

### [Background Art]

The ability of rubber compositions to be tacky before curing is an important property to the rubber article building. Indeed, for making the rubber articles, especially tires, it is necessary to be able to apply the different layers of the rubber articles on each other and that these layers stick to each other before curing of the rubber articles, curing which will associate for crosslinking the layers to others. This property of tack of the compositions before curing (vulcanization), is also called "tackiness" or "uncured tack" or "unvulcanized tack" or "green tack".

### [Citation List]

### [Patent Literature]

[PTL 1]
JP2005-325302

The Patent literature 1 discloses a rubber composition comprising a cobalt acetylacetonate in order to have excellent breaking properties. JP2020 114896 relates to a rubber composition for pneumatic tires, which has excellent workability, tackiness over time and heat generation.

However, there is a problem with the rubber composition disclosed in the Patent literature 1 in that there is concern that the tackiness of the rubber composition, especially after aging, may be deteriorated by the cobalt acetylacetonate.

During their research, the inventor has discovered that a specific rubber composition intended in particular for a rubber article, which allows an unexpectedly improved the tackiness of the rubber composition after aging while maintaining or improving the initial tackiness and the crack resistance of the rubber composition.

In the present description, unless expressly stated otherwise, all the percentages (%) indicated are percentages by weight (wt%).

The expression "elastomer matrix" is understood to mean, in a given composition, all of the elastomers present in said rubber composition.

The abbreviation "phr" signifies parts by weight per hundred parts by weight of the elastomer matrix in the considered rubber composition.

In the present description, unless expressly indicated otherwise, each Tg_{DSC} (glass transition temperature) is measured in a known way by DSC (Differential Scanning Calorimetry) according to Standard ASTM D3418-08.

Any interval of values denoted by the expression "between a and b" represents the range of values of more than "a" and of less than "b" (i.e. the limits a and b excluded) whereas any interval of values denoted by the expression "from a to b" means the range of values going from "a" to "b" (i.e. including the strict limits a and b).

The expression "based on" should be understood in the present application to mean a composition comprising the mixture(s), the product of the reaction of the various constituents used or both, some of the constituents being able or intended to react together, at least partly, during the various manufacturing phases of the composition, in particular during the vulcanization (curing).

### [Summary of Invention]

### [Solution to Problem]

A first aspect of the invention is a rubber composition, preferably an adhesive rubber composition, based on an elastomer matrix, a reinforcing filler, a cobalt acetylacetonate and a fatty acid based on more than 10% by weight of an unsaturated fatty acid per 100% by weight of the fatty acid, wherein the elastomer matrix comprises more than 50 phr of a polyisoprene, wherein the amount of the cobalt acetylacetonate is between 0.1 and 2.0 phr, wherein the amount of fatty acid is between 0.1 and 2.0 phr, and wherein the amount by weight of the unsaturated fatty acid per 100% by weight of the fatty acid is more than 50%.

### [Advantageous Effects of Invention]

The specific rubber composition allows an unexpectedly improved the tackiness of the rubber composition after aging while maintaining or improving the initial tackiness and the crack resistance of the rubber composition.

### [Description of Embodiments]

Each of the below aspect(s), the embodiment(s), the instantiation(s), and the variant(s) including each of the preferred range(s), matter(s) or both may be applied to any one of the other aspect(s), the other embodiment(s), the other instantiation(s) and the other variant(s) of the invention unless expressly stated otherwise.

The rubber composition according to the invention is based on an elastomer matrix that comprises more than 50 phr of a polyisoprene.

Elastomer (or loosely "rubber", the two terms being regarded as synonyms) of the "diene" type is to be understood in a known manner as an (meaning one or more) elastomer derived at least partly (i.e. a homopolymer or a copolymer) from diene monomers (monomers bearing two carbon-carbon double bonds, conjugated or not).

These diene elastomers can be classified into two categories: "essentially unsaturated" or "essentially saturated". Generally, the expression "essentially unsaturated" is understood to mean a diene elastomer resulting at least in part from conjugated diene monomers having a content of units of diene origin (conjugated dienes) which is greater than 15% (mol %); thus it is that diene elastomers such as butyl rubbers or diene/α -olefin copolymers of the EPDM type do not fall under the preceding definition and may especially be described as "essentially saturated" diene elastomers (low or very low content of units of diene origin, always less than 15%). In the category of "essentially unsaturated" diene elastomers, the expression "highly unsaturated" diene elastomer is understood to mean in particular a diene elastomer having a content of units of diene origin (conjugated dienes) which is greater than 50%.

Although it applies to any type of diene elastomer, a person skilled in the art of tires will understand that the invention is employed with essentially unsaturated diene elastomers.

Given these definitions, the expression diene elastomer capable of being used in the compositions in accordance with the invention is understood in particular to mean:
(a) - any homopolymer obtained by polymerization of a conjugated diene monomer, preferably having from 4 to 12 carbon atoms;
(b) - any copolymer obtained by copolymerization of one or more conjugated dienes with one another or with one or more vinyl aromatic compounds preferably having from 8 to 20 carbon atoms

The following are suitable in particular as conjugated dienes: 1,3-butadiene, 2-methyl-1,3-butadiene, 2,3-di(C₁-C₅ alkyl)-1,3-butadienes, such as, for example, 2,3-dimethyl-1,3-butadiene, 2,3-diethyl-1,3-butadiene, 2-methyl-3-ethyl-1 ,3-butadiene or 2-methyl-3-isopropyl-1 ,3-butadiene, an aryl-1,3-butadiene, 1,3-pentadiene or 2,4-hexadiene. The following, for example, are suitable as vinylaromatic compounds: styrene, ortho-, meta- or para-methylstyrene, the "vinyltoluene" commercial mixture, para-(tert-butyl) styrene, methoxystyrenes, chlorostyrenes, vinylmesitylene, divinylbenzene or vinylnaphthalene.

A second aspect of the invention is the rubber composition according to the first aspect, wherein the elastomer matrix further comprises at least one diene elastomer selected from the group consisting of a polybutadiene, a butadiene copolymer, an isoprene copolymer and combinations thereof.

According to a preferred embodiment of the second aspect, the polybutadiene has a content (molar %) of 1,2-units of between 4% and 80% or has a content (molar %) of cis-1,4-units of more than 80%, more preferably more than 90% (molar %), still more preferably at least 96% (molar %).

According to a preferred embodiment of the first aspect, the polyisoprene is natural rubber (NR), a synthetic polyisoprene (IR) or combinations thereof. The synthetic polyisoprene may be a synthetic cis-1,4-polyisoprene, preferably having a content (molar %) of cis-1,4 bonds of more than 90%, more preferably more than 95%, still more preferably more than 98%.

According to a preferred embodiment of the second aspect, the butadiene copolymer is selected from the group consisting of styrene butadiene copolymers (SBR), butadiene isoprene copolymers (BIR), styrene butadiene isoprene copolymers (SBIR) and combinations thereof.

According to a preferred embodiment of the second aspect, the isoprene copolymer is selected from the group consisting of butadiene isoprene copolymers (BIR), styrene isoprene copolymers (SIR), styrene butadiene isoprene copolymers (SBIR) and combinations thereof

The elastomer matrix comprises more than 50 phr, preferably more than 60 phr, more preferably more than 70 phr, still more preferably more than 80 phr, particularly more than 90 phr, more particularly more than 95 phr, still more particularly 100 phr, of a polyisoprene.

According to a preferred embodiment of the first aspect, the polyisoprene comprises more than 50%, preferably more than 60%, more preferably more than 70%, still more preferably more than 80%, particularly more than 90%, more particularly 95%, still more particularly 100%, by weight of natural rubber per 100% by weight of the polyisoprene.

The rubber composition according to the invention is based on a reinforcing filler.

Use may be made of any type of reinforcing filler known for its capabilities of reinforcing a rubber composition which can be used for the manufacture of the article, for example a reinforcing organic filler (such as carbon black), a reinforcing inorganic filler (such as silica, with which a coupling agent is combined in a known way) or combinations of the reinforcing organic filler and the reinforcing inorganic filler.

As carbon blacks, all carbon blacks conventionally used in tires ("tire-grade" blacks) are suitable, such as for example reinforcing carbon blacks of the 100, 200 or 300 series in ASTM grades (such as for example, the N115, N134, N234, N326, N330, N339, N347 or N375 blacks), or carbon blacks higher series, the 500, 600, 700 or 800 series in ASTM grades (such as for example the N550, N660, N683, N772, N774 blacks). The carbon blacks might for example be already incorporated in an elastomer matrix, for instance, a diene elastomer, in the form of a masterbatch (see for example applications WO 97/36724 or WO 99/16600).

A third aspect of the invention is the rubber composition according to any one of the first to the second aspects, wherein the reinforcing filler comprises more than 50%, preferably more than 60%, more preferably more than 70%, still more preferably more than 80%, particularly more than 90%, more particularly more than 95%, still more particularly 100%, by weight of a carbon black per 100% by weight of the reinforcing filler.

A fourth aspect of the invention is the rubber composition according to any one of the first to the third aspects, wherein the amount of reinforcing filler is between 10 and 100 phr, preferably between 20 and 90 phr, more preferably between 30 and 80 phr, still more preferably between 40 and 70 phr, particularly between 50 and 60 phr.

The rubber composition according to the invention is based on a cobalt acetylacetonate.

A fifth aspect of the invention is the rubber composition according to any one of the first to the fourth aspects, wherein the cobalt acetylacetonate is selected from the group consisting of cobalt (II) acetylacetonate, cobalt (III) acetylacetonate and combinations thereof, preferably cobalt (II) acetylacetonate that is cobalt (II) 4-oxopent-2-en-2-olate.

The amount of the cobalt acetylacetonate is between 0.1 and 2.0 phr, preferably between 0.5 and 1.5 phr.

According to a preferred embodiment, the rubber composition is free of a cobalt salt other than the cobalt acetylacetonate or is based on at least one cobalt salt other than the cobalt acetylacetonate, and the amount by weight of the cobalt salt other than the cobalt acetylacetonate is lower than that of the cobalt acetylacetonate.

The rubber composition according to the invention is based on a fatty acid based on more than 10% by weight of an unsaturated fatty acid per 100% by weight of the fatty acid.

The fatty acid may be further based on a saturated fatty acid that is an aliphatic monocarboxylic acid not having an unsaturated bond in the hydrocarbon chain, for example, palmitic acid, stearic acid.

The unsaturated fatty acid is an aliphatic monocarboxylic acid having at least one unsaturated bond in the hydrocarbon chain.

The amount of the fatty acid is between 0.1 and 2.0 phr, preferably between 0.2 and 1.0 phr.

The amount by weight of the unsaturated fatty acid per 100% by weight of the fatty acid is more than 50%, preferably more than 60%.

According to a preferred embodiment of the invention, the amount by weight of the unsaturated fatty acid per 100% by weight of the fatty acid is at most 100%.

A sixth aspect of the invention is the rubber composition according to any one of the first to the fifth aspects, wherein the unsaturated fatty acid is a linear unsaturated fatty acid having from 4 to 30 carbon atoms, preferably from 8 to 26 carbon atoms, more preferably from 12 to 22 carbon atoms, still more preferably 16 to 18 carbon atoms.

According to a preferred embodiment of the sixth aspect, the linear unsaturated fatty acid has at least 12 carbon atoms and the linear unsaturated fatty acid has the first carbon-carbon double bond located at the third or later carbon, preferably located at the fifth or later carbon, more particularly located at the sixth or later carbon, counted from the methyl side which is the end of the linear unsaturated fatty acid.

According to a preferred embodiment of the invention, the unsaturated fatty acid (IUPAC name) is based on at least one of butenoic acid (C4), pentenoic acid (C5), hexenoic acid (C6), heptenoic acid (C7), octenoic acid (C8), nonenoic acid (C9), decenoic acid (C10), undecenoic acid (C11), dodecenoic acid (C12), tridecenoic acid (C13), tetradecenoic acid (C14), pentadecenoic acid (C15), hexadecenoic acid (C16), heptadecenoic acid (C17), octadecenoic acid (C18), nonadecenoic acid (C19), icosenoic acid (C20), henicosenoic acid (C21), docosenoic acid (C22), tricosenoic acid (C23), tetracosenoic acid (C24), pentacosenoic acid (C25), hexacosenoic acid (C26), heptacosenoic acid (C27), octacosenoic acid (C28), nonacosenoic acid (C29), triacontenoic acid (C30) or combinations thereof.

An seventh aspect of the invention is the rubber composition according to any one of the first to the sixth aspects, wherein the unsaturated fatty acid has from 1 to 6 carbon-carbon double bonds, preferably from 1 to 5 carbon-carbon double bonds, more preferably from 1 to 4 carbon-carbon double bonds, still more preferably from 1 to 3.

A eighth aspect of the invention is the rubber composition according to any one of the first to the seventh aspects, wherein the unsaturated fatty acid is based on more than 10%, preferably more than 20%, more preferably more than 30%, still more preferably more than 40%, particularly more than 50%, by weight of a polyunsaturated fatty acid per 100% weight of the unsaturated fatty acid.

According to a preferred embodiment of the eighth aspect, the polyunsaturated fatty acid has at least 2 carbon-carbon double bonds, preferably from 2 to 6 carbon-carbon double bonds, more preferably from 2 to 5 carbon-carbon double bonds, still more preferably from 2 to 4 carbon-carbon double bonds, particularly from 2 to 3 carbon-carbon double bonds.

According to a preferred embodiment of the invention, the unsaturated fatty acid (common name) is based on at least one of myristoleic acid (C14, monounsaturated fatty acid, n-5), palmitoleic acid (C16, monounsaturated fatty acid, n-7), stearidonic acid (C18, tetraunsaturated fatty acid, n-3), vaccenic acid (C18, monounsaturated fatty acid, n-7), oleic acid (C18, monounsaturated fatty acid, n-9), elaidic acid (C18, monounsaturated fatty acid, n-9), linoleic acid (C18, diunsaturated fatty acid, n-6), alpha-linolenic acid (C18, triunsaturated fatty acid, n-3), gamma-linolenic acid (C18, triunsaturated fatty acid, n-6), gadoleic acid (C20, monounsaturated fatty acid, n-11), eicosenoic acid (C20, monounsaturated fatty acid, n-11), eicosadienoic acid (C20, diunsaturated fatty acid, n-6), arachidonic acid (C20, tetraunsaturated fatty acid, n-6), eicosapentaenoic acid (C20, pentaunsaturated fatty acid, n-3), erucic acid (C22, monounsaturated fatty acid, n-9), docosahexaenoic acid (C22, hexaunsaturated fatty acid, n-3), nervonic acid (C24, monounsaturated fatty acid, n-9) or combinations thereof. It is noted that n-x (x=3, 5, 6, 7, 9 and 11), described in the parentheses after the compound names indicates the carbon position where the first carbon-carbon double bond is located, counting from the methyl group side which is the end of the unsaturated fatty acid.

A ninth aspect of the invention is the rubber composition according to any one of the first to the eighth aspects, wherein the unsaturated fatty acid is based on at least one selected from the group consisting of oleic acid, linoleic acid, alpha-linolenic acid and combinations thereof, preferably wherein the amount by weight of linoleic acid is higher than that of oleic acid, more preferably wherein the amount by weight of linoleic acid is higher than that of alpha-linolenic acid, still more preferably wherein the amount by weight of oleic acid is higher than that of alpha-linolenic acid.

The rubber compositions according to the invention may be based on all or at least one portion of the usual additives generally used in the rubber compositions intended for rubber articles, such as, for example, protection agents, such as antiozone waxes, chemical antiozonants, antioxidants, plasticizing agents (for example, liquid plasticizers and hydrocarbon resins), tackifying resins, methylene acceptors (for example phenolic novolak resin), methylene donors (for example, hexamethylenetetramine (HMT), hexamethoxymethylmelamine (H3M) or combinations thereof), a crosslinking system (for examples, sulfur (sulphur), donors of sulfur, peroxide, bismaleimides, vulcanization accelerators, vulcanization activators, vulcanization retarder (for example, N-cyclohexylthiophthalimide), anti-reversion agents (for example, hexamethylene thiosulfate salt) or combinations thereof) or combinations thereof.

The rubber composition according to the invention may be manufactured in appropriate mixers using two successive preparation phases well known to a person skilled in the art: a first phase of thermomechanical working or kneading (referred to as "non-productive" phase) at high temperature, up to a maximum temperature of between 110°C and 190°C, preferably between 130°C and 180°C, followed by a second phase of mechanical working (referred to as "productive" phase) at a lower temperature, typically of less than 110°C, for example between 40°C and 100°C, finishing phase during which the crosslinking or vulcanization system is incorporated.

A process which can be used for the manufacture of such compositions comprises, for example and preferably, the following steps:
- incorporating in the elastomer matrix, in a mixer, the reinforcing filler, the fatty acid, the cobalt acetylacetonate during a first stage ("non-productive" stage) everything being kneaded thermomechanically (for example in one or more steps) until a maximum temperature of between 110°C and 190°C is reached;
- cooling the combined mixture to a temperature of less than 100°C;
- subsequently incorporating, during a second stage (referred to as a "productive" stage), sulfur, a vulcanization accelerator(s), a vulcanization retarder(s) in the crosslinking system and a methylene donor(s); and
- kneading everything up to a maximum temperature of less than 110°C.

By way of example, the first (non-productive) phase is carried out in a single thermomechanical stage during which all the necessary constituents are introduced into an appropriate mixer, such as a standard internal mixer, followed, in a second step, for example after kneading for 1 to 2 minutes, by the other additives, optional additional filler-covering agents or processing aids, with the exception of sulfur, the vulcanization accelerator(s) and the vulcanization retarder(s) in the crosslinking system and the methylene donor(s). The total kneading time, in this non-productive phase, is preferably between 1 and 15 min.

After cooling the mixture thus obtained, sulfur, the vulcanization accelerator(s) and the vulcanization retarder(s) in the crosslinking system and the methylene donor(s) may be then incorporated at low temperature (for example, between 40°C and 100°C), generally in an external mixer, such as an open mill; the combined mixture is then mixed (the second (productive) phase) for a few minutes, for example between 2 and 15 min.

The crosslinking system may preferably be based on sulfur and on a primary vulcanization accelerator(s), in particular on an accelerator of sulfenamide type. Added to this vulcanization system are various known secondary accelerators or vulcanization activators, such as zinc oxide, stearic acid as a saturated fatty acid, guanidine derivatives (in particular diphenylguanidine), and the like, incorporated during the first non-productive phase, during the productive phase or both.

According to a preferred embodiment of the invention, the rubber composition is based on a crosslinking system based on sulfur, preferably the content of sulfur is more than 1 phr, more preferably between 2.0 and 10 phr, still more preferably between 3.0 and 8.0 phr, particularly between 4.0 and 6.0 phr.

Use may be made, as vulcanization accelerator (primary or secondary) of any compound capable of acting as accelerator of the vulcanization of elastomer matrix, for instance, diene elastomers, in the presence of sulfur, in particular accelerators of the thiazoles type and their derivatives, accelerators of thiurams types, or zinc dithiocarbamates. These accelerators are more preferably selected from the group consisting of 2-mercaptobenzothiazyl disulfide (abbreviated to "MBTS"), N-cyclohexyl-2-benzothiazole sulfenamide (abbreviated to "CBS"), N,N-dicyclohexyl-2 benzothiazolesulphenamide ("DCBS"), N-tert-butyl-2-ben zothiazolesulfenamide ("TBBS"), N-tert-butyl-2 benzothiazolesulfenimide ("TBSI"), zinc dibenzyldithiocarbamate ("ZBEC"), Tetrabenzylthiuram disulfide ("TBZTD") and the combinations thereof.

According to a preferred embodiment of the invention, the rubber composition is based on a crosslinking system based on at least one vulcanization accelerator, preferably the content of the vulcanization accelerator is more than 0.2 phr, more preferably between 0.3 and 3.0 phr, still more preferably between 0.4 and 2.0 phr, particularly between 0.5 and 1.0 phr.

According to a preferred embodiment of the invention, the rubber composition is based on a crosslinking system based on at least one anti-reversion agent, preferably the anti-reversion agent is a hexamethylene-1,6-bisthiosulfate salt, more preferably the hexamethylene-1,6-bisthiosulfate salt is at least one of sodium hexamethylene-1,6-bisthiosulfate, potassium hexamethylene-1,6-bisthiosulfate, calcium hexamethylene- 1,6-bisthiosulfate and combinations thereof.

According to a more preferred embodiment of the preferred embodiment, the content of the anti-reversion agent is between 0.1 and 5.0 phr, preferably between 0.5 and 4.0 phr, more particularly between 1.0 and 3.0 phr.

The final composition thus obtained is subsequently calendered, for example in the form of a sheet or of a plaque, in particular for laboratory characterization, or else extruded in the form of a rubber profiled element which can be used directly as a rubber article.

The vulcanization (or curing) is carried out in a known way at a temperature generally of between 110°C and 190°C for a sufficient time which may vary, for example, between 5 and 90 min depending in particular on the curing temperature, the vulcanization system adopted and the vulcanization kinetics of the composition under consideration.

A tenth aspect of the invention is a rubber composite comprising at least one metal monofilament coated with a rubber composition according to any one of the first to the ninth aspects, preferably wherein the metal monofilament is a steel monofilament.

According to a preferred embodiment of the invention, an article comprises a rubber composition according to any one of the first to the ninth aspects, preferably the article comprises a rubber composite according to the tenth aspect.

According to a more preferred embodiment of the preferred embodiment, the article is a tire, a shoe, a conveyor or a caterpillar track.

A eleventh aspect of the invention is a tire comprising a rubber composition according to any one of the first to the ninth aspects, preferably the tire comprising a rubber composite according to the tenth aspect.

The tires of the invention are particularly intended to equip passenger motor vehicles, including 4×4 (four-wheel drive) vehicles and SUV (Sport Utility Vehicles) vehicles, and industrial vehicles particularly selected from vans and heavy duty vehicles (i.e., bus or heavy road transport vehicles (lorries, tractors, trailers)).

According to a preferred embodiment of the eleventh aspect, the rubber composition is an internal rubber composition intended here to mean any rubber part of the tire which is not open to the outside of the tire, in other words which is not in contact with the air or with an inflating gas and which is therefore situated in the actual inside of the tire structure; by way of examples, mention will notably be made of the rubber composition present in the bead zone, the carcass reinforcement or the crown reinforcement or belt of the tire.

The invention relates to the rubber compositions in the raw state (i.e., before curing) and in the cured state (i.e., after crosslinking or vulcanization).

The invention is further illustrated by the following examples

### [Example]

In order to confirm the effect of the invention, three rubber compositions (C-1 to C-3) were used. The rubber compositions are based on a diene elastomer (NR, as an elastomer matrix) reinforced with a carbon black (as a reinforcing filler), a cobalt salt (a cobalt tallate or a cobalt acetylacetonate), and a fatty acid (a stearic acid, or a stearic acid and tall oil type fatty acids). The formulations of the rubber compositions are shown in Table 1 with the amount of the various products expressed in phr.

Each rubber composition was produced as follows: The reinforcing filler, the cobalt salt, the fatty acid and the various other ingredients, with the exception of sulfur, a sulfured-vulcanization accelerator, and a vulcanization retarder (N-cyclohexylthiophthalimide (abbreviated as "CTP") in the crosslinking system and a methylene donner, were successively introduced into an internal mixer having an initial vessel temperature of approximately 60 °C ; the mixer was thus approximately 70% full (% by volume). Thermomechanical working (non-productive phase) was then carried out in one stage, which lasts in total approximately 3 to 4 minutes, until a maximum "dropping" temperature of 165°C was reached. The mixture thus obtained was recovered and cooled and then sulfur, the sulfured-vulcanization accelerator, and the vulcanization retarder (N-cyclohexylthiophthalimide (abbreviated as "CTP") in the crosslinking system and the methylene donner were incorporated on an external mixer (homofinisher) at 20 to 30°C, everything being mixed (productive phase) for an appropriate time (for example, between 5 and 12 min).

The rubber compositions thus obtained were subsequently calendered, either in the form of sheets (thickness of 2 to 3 mm) or of fine sheets of rubber, for the measurement of their physical or mechanical properties, or in the form of profiled elements which could be used directly, after cutting, assembling, or both to the desired dimensions, for example as tire semi-finished products.

The tackiness of each rubber composition in the uncured state was measured under a room temperature by a rolling ball tack test device in accordance with ASTM D3121-06 after cutting immediately (for the initial tackiness) and 5 days after cutting (for the tackiness after aging)

The rate of crack propagation, exhibiting the cracking resistance, was measured on test specimens of the rubber compositions (C-1 to C-3), with the aid of a cyclic fatigue machine ("Elastomer Test System") of the 381 type from MTS.

The test specimens were prepared by curing the rubber compositions at 150°C for 25 minutes or at 160°C for 90 minutes in a bell press, cooling them at ambient temperature for 1 day, and placing in an oven under air at a temperature of 77°C under a relative humidity of 60% for 20 days.

The cracking resistance was measured with the aid of repeated tensile actions on a test specimen which was initially accommodated (after a first tensile cycle), then notched. The tensile test specimen consisted of a rubber plaque of parallelepipedal shape, for example with a thickness of between 1 and 2 mm, a length of between 130 and 170 mm and a width of between 10 and 15 mm, with the two lateral edges each being covered lengthwise with a cylindrical rubber bead (diameter 5 mm) enabling the specimen to be anchored in the jaws of the tensile testing device. The test was conducted under air, at a temperature of 90° C. After accommodation, three very narrow notches of between 15 and 20 mm in length were made with the aid of a razor blade, at mid-width and aligned in the lengthwise direction of the test specimen, with one at each end and one at the center of the latter, before starting the test. With each tensile cycle, the degree of deformation of the test specimen was automatically adjusted so as to hold the energy restitution level (the amount of energy released during crack progression) constant at a value equal to 1000 J/m². The rate of crack propagation, that is, the crack propagation speeds was obtained by dividing a length of crack propagated by the deformation with a number of cycles of the deformation.

The results of the tackiness and the crack resistance are reported in Table 2, in relative units, the base 100 being selected for the reference (C-1) (it should be remembered that a value of greater than 100 indicates an improved performance).

The results from Table 2 demonstrate that the example (C-3) according to the invention has a better value of the tackiness after aging than that of the reference (C-1) and the comparative example (C-2), and the example (C-3) has equivalent or superior values of the initial tackiness and the crack resistance to that of the reference (C-1) and the comparative example (C-2).

In conclusion, the rubber composition allows an unexpectedly improved the tackiness of the rubber composition after aging while maintaining or improving the initial tackiness and the crack resistance of the rubber composition.

**[Table 1]**

| | C-1 | C-2 | C-3 |
|---|---|---|---|
| NR (1) | 100 | 100 | 100 |
| Carbon black (2) | 55 | 55 | 55 |
| Cobalt compound 1 (3) | 2.0 | | |
| Cobalt compound 2 (4) | | 0.9 | 0.9 |
| Fatty acid 1 (5) | 0.6 | 0.6 | |
| Fatty acid 2 (6) | | | 0.6 |
| Antioxidant (7) | 2.3 | 2.3 | 2.3 |
| Zinc oxide (8) | 8.0 | 8.0 | 8.0 |
| Anti-reversion agent (9) | 2.0 | 2.0 | 2.0 |
| Methylene acceptor (10) | 0.7 | 0.7 | 0.7 |
| Methylene donner (11) | 0.3 | 0.3 | 0.3 |
| Sulfur | 5.0 | 5.0 | 5.0 |
| Vulcanization accelerator (13) | 0.7 | 0.7 | 0.7 |
| CTP (14) | 0.2 | 0.2 | 0.2 |

| | | | |
|---|---|---|---|
| (1) NR: Natural rubber (peptised); (2) Carbon black (ASTM grade N326 (designation according to ASTM D-1765) from Cabot); (3) Cobalt tallate ("Dicnate tallate" from DIC Synthetic Resins Company); (4) Cobalt (II) acetylacetonate (from Aldrich); (5) Stearic acid ("Pristerene 4931" from Uniqema); (6) Tall oil type fatty acids ("GREENFAC 8959 BULK" from Green Oleo, Iodine value: 130 to 145 (g/100g)) and stearic acid ("Pristerene 4931" from Uniqema); Mass ratio [(the tall oil type fatty acids)/(the stearic acid)]: 4/1; Mass ratio in the tall oil type fatty acids: C16 fatty acids (palmitic acid): 1.0 to 6.0%, C18 fatty acids (stearic acid): 0.0 to 3.0%, C18:1 fatty acids (oleic acid): 30.0 to 40.0%, C18:2 fatty acids (linoleic acid): 52.0 to 60.0%, C18:3 fatty acids (alpha-linolenic acid): 0.0 to 4.0%; (7) N-(1,3-dimethylbutyl)-N-phenyl-para-phenylenediamine ("Santoflex 6-PPD" from Flexsys); (8) Zinc oxide (industrial grade from Umicore company); (9) Sodium hexamethylene thiosulfate ("Duralink HTS" from Plexsys); (10) Resorcinol (from Sumitomo); (11) Hexamethylenetetramine (from Degussa); (12) N-(t-butyl)-2-benzothiazolesulphenamide ("Santocure TBBS" from Flexsys); (13) N-cyclohexylthiophthalimide ("Vulkalent G" from Lanxess). | | | |

**[Table 2]**

| | C-1 | C-2 | C-3 |
|---|---|---|---|
| Initial tackiness | 100 | 90 | 100 |
| Tackiness after ageing | 100 | 80 | 120 |
| Crack resistance | 100 | 130 | 130 |

## Claims

1. A rubber composition based on:
- an elastomer matrix;
- a reinforcing filler;
- a cobalt acetylacetonate; and
- a fatty acid based on more than 10% by weight of an unsaturated fatty acid per 100% by weight of the fatty acid
wherein the elastomer matrix comprises more than 50 phr of a polyisoprene,
wherein the amount of the cobalt acetylacetonate is between 0.1 and 2.0 phr,
wherein the amount of fatty acid is between 0.1 and 2.0 phr, and wherein the amount by weight of the unsaturated fatty acid per 100% by weight of the fatty acid is more than 50%.

2. The rubber composition according to Claim 1, wherein the elastomer matrix further comprises at least one diene elastomer selected from the group consisting of a polybutadiene, a butadiene copolymer, an isoprene copolymer and combinations thereof.

3. The rubber composition according to any one of Claims 1 to 2, wherein the reinforcing filler comprises more than 50% by weight of a carbon black per 100% by weight of the reinforcing filler.

4. The rubber composition according to any one of Claims 1 to 3, wherein the amount of reinforcing filler is between 10 and 100 phr.

5. The rubber composition according to any one of Claims 1 to 4, wherein the cobalt acetylacetonate is selected from the group consisting of cobalt (II) acetylacetonate, cobalt (III) acetylacetonate and combinations thereof.

6. The rubber composition according to any one of Claims 1 to 5, wherein the unsaturated fatty acid is a linear unsaturated fatty acid having from 4 to 30 carbon atoms.

7. The rubber composition according to any one of Claims 1 to 6, wherein the unsaturated fatty acid has from 1 to 6 carbon-carbon double bonds.

8. The rubber composition according to any one of Claims 1 to 7, wherein the unsaturated fatty acid is based on more than 10% by weight of a polyunsaturated fatty acid per 100% weight of the unsaturated fatty acid.

9. The rubber composition according to any one of Claims 1 to 8, wherein the unsaturated fatty acid is based on at least one selected from the group consisting of oleic acid, linoleic acid, alpha-linolenic acid and combinations thereof.

10. A rubber composite comprising at least one metal monofilament coated with a rubber composition according to any one of Claims 1 to 9.

11. A tire comprising a rubber composition according to any one of Claims 1 to 9.

## Patentansprüche

1. Kautschukzusammensetzung auf der Basis von:
- einer Elastomermatrix;
- einem verstärkenden Füllstoff;
- einem Cobaltacetylacetonat; und
- einer Fettsäure, die auf mehr als 10 Gew.-% einer ungesättigten Fettsäure pro 100 Gew.-% der Fettsäure basiert;
wobei die Elastomermatrix mehr als 50 phe eines Polyisoprens umfasst, wobei die Menge des Cobaltacetylacetonats zwischen 0,1 und 2,0 phe liegt, wobei die Menge an Fettsäure zwischen 0,1 und 2,0 phe liegt und wobei die Gewichtsmenge an ungesättigter Fettsäure pro 100 Gew.-% der Fettsäure mehr als 50 % beträgt.

2. Kautschukzusammensetzung nach Anspruch 1, wobei die Elastomermatrix ferner mindestens ein Dienelastomer umfasst, das aus der Gruppe bestehend aus einem Polybutadien, einem Butadien-Copolymer, einem Isopren-Copolymer und Kombinationen davon ausgewählt ist.

3. Kautschukzusammensetzung nach einem der Ansprüche 1 bis 2, wobei der verstärkende Füllstoff mehr als 50 Gew.-% eines Rußes pro 100 Gew.-% des verstärkenden Füllstoffs umfasst.

4. Kautschukzusammensetzung nach einem der Ansprüche 1 bis 3, wobei die Menge an verstärkendem Füllstoff zwischen 10 und 100 phe liegt.

5. Kautschukzusammensetzung nach einem der Ansprüche 1 bis 4, wobei das Cobaltacetylacetonat aus der Gruppe bestehend aus Cobalt(II)-acetylacetonat, Cobalt(III)-acetylacetonat und Kombinationen davon ausgewählt ist.

6. Kautschukzusammensetzung nach einem der Ansprüche 1 bis 5, wobei es sich bei der ungesättigten Fettsäure um eine lineare ungesättigte Fettsäure mit 4 bis 30 Kohlenstoffatomen handelt.

7. Kautschukzusammensetzung nach einem der Ansprüche 1 bis 6, wobei die ungesättigte Fettsäure 1 bis 6 Kohlenstoff-Kohlenstoff-Doppelbindungen aufweist.

8. Kautschukzusammensetzung nach einem der Ansprüche 1 bis 7, wobei die ungesättigte Fettsäure auf mehr als 10 Gew.-% einer mehrfach ungesättigten Fettsäure pro 100 Gew.-% der ungesättigten Fettsäure basiert.

9. Kautschukzusammensetzung nach einem der Ansprüche 1 bis 8, wobei die ungesättigte Fettsäure auf mindestens einer Fettsäure aus der Gruppe bestehend aus Ölsäure, Linolsäure, alpha-Linolensäure und Kombinationen davon basiert.

10. Kautschukverbundwerkstoff, umfassend mindestens ein Metallmonofilament, das mit einer Kautschukzusammensetzung nach einem der Ansprüche 1 bis 9 beschichtet ist.

11. Reifen, umfassend eine Kautschukzusammensetzung nach einem der Ansprüche 1 bis 9.

## Revendications

1. Composition de caoutchouc à base de :
• une matrice élastomère ;
• une charge renforçante ;
• un acétylacétonate de cobalt ; et
• un acide gras contenant plus de 10 % en poids d'un acide gras insaturé, par rapport à 100 % en poids de l'acide gras,
dans laquelle la matrice élastomère comprend plus de 50 pce de polyisoprène,
dans laquelle la quantité d'acétylacétonate de cobalt est comprise entre 0,1 et 2,0 pce,
dans laquelle la quantité d'acide gras est comprise entre 0,1 et 2,0 pce, et dans laquelle la teneur en acide gras insaturé est supérieure à 50 % en poids, par rapport à 100 % en poids de l'acide gras.

2. Composition de caoutchouc selon la revendication 1, dans laquelle la matrice élastomère comprend en outre au moins un élastomère diénique choisi dans le groupe constitué par un polybutadiène, un copolymère de butadiène, un copolymère d'isoprène et leurs combinaisons.

3. Composition de caoutchouc selon l'une quelconque des revendications 1 à 2, dans laquelle la charge renforçante comprend plus de 50 % en poids de noir de carbone, par rapport à 100 % en poids de charge renforçante.

4. Composition de caoutchouc selon l'une quelconque des revendications 1 à 3, dans laquelle la quantité de charge renforçante est comprise entre 10 et 100 pce.

5. Composition de caoutchouc selon l'une quelconque des revendications 1 à 4, dans laquelle l'acétylacétonate de cobalt est choisi dans le groupe constitué par l'acétylacétonate de cobalt (II), l'acétylacétonate de cobalt (III) et leurs combinaisons.

6. Composition de caoutchouc selon l'une quelconque des revendications 1 à 5, dans laquelle l'acide gras insaturé est un acide gras insaturé linéaire comportant de 4 à 30 atomes de carbone.

7. Composition de caoutchouc selon l'une quelconque des revendications 1 à 6, dans laquelle l'acide gras insaturé comporte de 1 à 6 doubles liaisons carbone-carbone.

8. Composition de caoutchouc selon l'une quelconque des revendications 1 à 7, dans laquelle l'acide gras insaturé contient plus de 10 % en poids d'un acide gras polyinsaturé, par rapport à 100 % en poids de l'acide gras insaturé.

9. Composition de caoutchouc selon l'une quelconque des revendications 1 à 8, dans laquelle l'acide gras insaturé est choisi dans le groupe constitué par l'acide oléique, l'acide linoléique, l'acide alpha-linolénique et leurs combinaisons.

10. Composite de caoutchouc comprenant au moins un monofilament métallique revêtu d'une composition de caoutchouc selon l'une quelconque des revendications 1 à 9.

11. Pneumatique comprenant une composition de caoutchouc selon l'une quelconque des revendications 1 à 9.
